# EUROPÄISCHE PATENTANMELDUNG

(11) **EP 2 641 777 A2**
(43) Veröffentlichungstag der Anmeldung: **25.09.2013**
(21) Anmeldenummer: 13158078.9
(22) Anmeldetag: 07.03.2013
(51) Int. Cl.: B60P 7/08, B62D 25/20

(54) **Ladeboden sowie Profilelement für einen Ladeboden**

(30) Priorität: 23.03.2012 DE 102012204732
(71) Anmelder: Ford-Werke GmbH, 50735 Köln (DE)
(72) Erfinder: Baldsiefen, Lothar, 50769 Köln (DE); Huth, René A., 53797 Lohmar (DE); Valter, Dino, 52355 Düren (DE)
(74) Vertreter: Dörfler, Thomas

(57) **Zusammenfassung**

Ein erfindungsgemäßer Ladeboden für ein Fahrzeug umfasst umfassend eine Mehrzahl von in einer Längsrichtung langerstreckten, nebeneinander angeordneten und miteinander verbundenen Profilelementen, wobei der Ladeboden (1) mindestens einen in der Längsrichtung durchgehenden Kanal (13, 16) und mindestens eine Leuchte aufweist zur Beleuchtung eines Innenraums des Fahrzeugs, wobei mindestens eine Versorgungsleitung zur Energieversorgung der Leuchte in dem Kanal (13, 16) geführt ist. Die Erfindung betrifft auch ein Profilelement für einen derartigen Ladeboden.

## Beschreibung

Die Erfindung betrifft einen Ladeboden für ein Fahrzeug sowie ein Profilelement für einen derartigen Ladeboden.

Der Laderaum von Fahrzeugen ist in der Regel mit einem auf einer Bodenplatte oder einer Tragstruktur des Fahrzeugs befestigten Ladeboden versehen, der zur Vereinfachung der Beladung als im Wesentlichen ebene Fläche ausgebildet ist und die Last der Ladung aufnimmt. Ferner ist bei der Beladung von Fahrzeugen häufig die Aufgabe gestellt, Gegenstände sicher zu befestigen, so dass diese während der Fahrt am Fahrzeug fixiert sind. Hierfür weisen bekannte Ladeböden beispielsweise feststehende Ösen zur Aufnahme von Zurrgurten auf oder auch an Ladeschienen verschiebbare Befestigungselemente, die in eine Vielzahl von Positionen gebracht werden können und an denen beispielsweise Ösen für Zurrgurte angeordnet sind. Der Ladeboden kann aus einer Mehrzahl von Profilelementen zusammengesetzt sein, die derartige Ladeschienen aufweisen. Bei einigen Fahrzeugen ist auch eine wahlweise Benutzung als Laderaum oder als Passagierraum möglich. Dabei besteht die Möglichkeit, auf dem Ladeboden Sitze zu befestigen.

Aus der US 3 877 671 ist ein Ladeboden mit integrierten Ladeschienen bekannt, der aus einzelnen extrudierten Elementen besteht, die miteinander verklebt werden. In der EP 1 901 955 B1 ist eine Bodenplatte offenbart, die aus einer Vielzahl von parallelen Elementen besteht, die jeweils an einem Boden eines Fahrzeugs befestigt werden. In der EP 1 701 860 B1 ist eine Bodenplatte offenbart, die aus Schienenprofil- und Bodenprofilteilen besteht und am Bodenblech von Transportfahrzeugen befestigt wird, wobei die Schienen- und Bodenprofilteile mechanisch miteinander verriegelt werden können. Aus der WO 01/38127 A1 ist ein Fahrzeugboden bekannt, der aus einer Mehrzahl ineinander eingreifender langerstreckter Profilbauteile zusammengesetzt ist, wobei einige der Profilbauteile sich in Längsrichtung erstreckende Nuten zur Aufnahme von Verankerungselementen zur Befestigung eines Sitzes oder einer Rollstuhlhalterung aufweisen. In der nicht vorveröffentlichten Patentanmeldung DE 10 2011 079 337.2, die durch Bezugnahme in die vorliegende Anmeldung aufgenommen wird, ist ein Ladeboden beschrieben, der aus einer Mehrzahl von Profilelementen besteht, die miteinander verbunden sind, wobei zumindest einige Profilelemente mindestens eine Ladeschiene und mindestens einen Verbindungsbereich zur Verbindung mit einem weiteren Profilelement umfassen, wobei die Ladeschiene eine Längsnut zur längsverschiebbaren Aufnahme von Gleitsteinen aufweist und die Ladeschiene in das jeweilige Profilelement integriert und von dem mindestens einen Verbindungsbereich separat ausgebildet ist. In der GB 2 353 769 A wird vorgeschlagen, dass ein Fahrzeugboden aus einer Mehrzahl vorgeformter ineinander fügbarer Fußbodenkomponenten besteht, die innere längserstreckte Kanäle aufweisen, die beispielsweise zur Führung von Kabeln genutzt werden können.

Sowohl bei einer Verwendung eines derartigen Ladebodens zur Befestigung von Sitzen in einem für den Personentransport bestimmten Fahrzeug bzw. Bereich eines Fahrzeugs als auch bei einer Verwendung des Ladebodens in einem Laderaum eines Fahrzeugs besteht ein Bedarf an einer Beleuchtung des durch den Ladeboden begrenzten Raums. In bekannter Weise kann der Laderaum bzw. Passagierraum durch eine etwa an einer Wand oder an der Decke angeordnete Leuchte beleuchtet werden. Hierdurch ist jedoch keine optimale Ausleuchtung des Raums erreichbar.

Es ist Aufgabe der vorliegenden Erfindung, einen Ladeboden der genannten Art sowie ein Profilelement für einen Ladeboden anzugeben, wobei eine verbesserte Beleuchtung des durch den Ladeboden begrenzten Innenraums ermöglicht wird.

Diese Aufgabe wird durch einen Ladeboden sowie durch ein Profilelement für einen Ladeboden wie in den unabhängigen Ansprüchen angegeben gelöst.

Ein erfindungsgemäßer Ladeboden ist insbesondere für einen Lade- oder einen Passagierraum eines Fahrzeugs geeignet, kann aber auch beispielsweise als Wand- oder Deckenverkleidung in einem Fahrzeug eingesetzt werden. Der Ladeboden umfasst eine Mehrzahl von langerstreckten Profilelementen, die nebeneinander im Wesentlichen parallel zueinander angeordnet und miteinander verbunden sind. Die Profilelemente sind vorzugsweise quer zu ihrer Längsrichtung formschlüssig miteinander verbunden, können aber auch beispielsweise reibschlüssig verbunden, verklebt und/oder verschweißt oder auf andere Weise miteinander verbunden sein. Vorzugsweise sind die Profilelemente durch Extrusion, beispielsweise als Aluminium-Strangpressprofile, hergestellt. Der Ladeboden kann weitere Elemente umfassen, etwa endseitige Abdeckkappen oder Elemente zur Befestigung des Ladebodens auf einer Bodenplatte oder einer Tragstruktur des Fahrzeugs.

Der erfindungsgemäße Ladeboden weist mindestens einen in der Längsrichtung der Profilelemente durchgehenden Kanal auf sowie mindestens eine Leuchte zur Beleuchtung eines Innenraums des Fahrzeugs, wobei mindestens eine Versorgungsleitung zur Energieversorgung des Leuchtmittels in dem Kanal geführt und ggf. darin befestigt ist. Vorzugsweise weist mindestens eines der miteinander verbundenen Profilelemente einen derartigen Kanal, eine Leuchte und eine Versorgungsleitung auf. Es ist jedoch auch möglich, dass ein solcher Kanal erst durch die Verbindung bzw. durch das Zusammenfügen von zwei oder mehr Profilelementen zum Aufbau des erfindungsgemäßen Ladebodens gebildet wird, wobei die Leuchte und die Versorgungsleitung einem der Profilelemente zugeordnet sein können. Die Versorgungsleitung ist insbesondere als elektrische Versorgungsleitung zur elektrischen Energieversorgung der Leuchte ausgebildet. Die elektrische Versorgungsleitung weist mindestens eine Leitung auf, wobei der Ladeboden elektrisch leitfähig und selbst zum Schließen eines Stromkreises geeignet sein kann. Die elektrische Versorgungsleitung kann aber auch mehrere elektrische Leitungen umfassen. Die Leuchte kann beispielsweise ein Leuchtmittel und eine Fassung umfassen, in der das Leuchtmittel gehalten ist, wobei die Versorgungsleitung mit der Fassung verbunden ist; die Leuchte kann auch selbst das Leuchtmittel sein, das direkt mit der Versorgungsleitung verbunden ist. Vorzugsweise umfasst der Ladeboden mehrere Leuchten, die jeweils auf derselben Seite des Ladebodens angeordnet sind, insbesondere auf der dem Innenraum des Fahrzeugs zugewandten Seite.

Dadurch, dass der Ladeboden einen durchgehenden Kanal und eine Leuchte zur Beleuchtung eines Innenraums des Fahrzeugs aufweist, und dass mindestens eine Versorgungsleitung zur Energieversorgung der Leuchte in dem Kanal geführt ist, wird ein Ladeboden geschaffen, in den eine Beleuchtung des Innenraums des Fahrzeugs integriert ist. Hierdurch wird eine verbesserte Beleuchtung des durch den Ladeboden begrenzten Bereichs des Innenraums des Fahrzeugs ermöglicht. Insbesondere kann es ermöglicht werden, dass eine verbesserte Innenraumbeleuchtung nach einem Einbau des Ladebodens ohne weitere Verkabelung einsatzbereit ist. Die Leuchte kann beispielsweise in einem in Längsrichtung mittleren Bereich des Ladebodens platziert sein. Dabei kann eine besonders gute Ausleuchtung des Innenraums erreichbar sein, wenn der Ladeboden nicht nur als Boden, sondern auch als Wand und/oder Decke eines Laderaums oder eines Passagierraums des Fahrzeugs verwendet wird. Ferner kann beispielsweise eine indirekte Beleuchtung realisiert werden durch Anstrahlung der Innenwände eines Fahrzeuginnenraums vom Ladeboden her, wodurch der Raumeindruck verstärkt wird.

Die Leuchte kann insbesondere auf der Oberfläche des Ladebodens bzw. eines diesen bildenden Profilelements angeordnet sein; in diesem Fall können eine oder mehrere Öffnungen in der Oberfläche des Ladebodens, die die Verbindung zum Kanal herstellen, zur Durchführung der Versorgungsleitung aus dem Kanal zum Leuchtmittel vorgesehen sein. Die Leuchte kann aber auch in einer derartigen Öffnung oder innerhalb des Kanals angeordnet sein und insbesondere derart angeordnet sein, dass eine Beleuchtung des Innenraums des Fahrzeugs durch die Öffnung hindurch erfolgt. Insbesondere im letzteren Fall kann ein Schutz der Leuchte gegen mechanische Beschädigungen erreicht werden. Die Öffnung kann beispielsweise als in Längsrichtung durchgehende Öffnung oder auch als Bohrung ausgebildet sein, die in ein etwa als Aluminium-Strangpressprofil hergestelltes Profilelement eingebracht worden ist.

Gemäß einer bevorzugten Ausführungsform der Erfindung wird der mindestens eine in der Längsrichtung durchgehende Kanal zwischen einer Oberstruktur eines Profilelements, einer Unterstruktur des Profilelements und/oder mindestens einer die Ober- und die Unterstruktur des Profilelements verbindenden Strebe ausgebildet. Die Ober- und die Unterstruktur können zur Ausbildung einer flachen Ober- bzw. Unterseite des Ladebodens eine im Wesentlichen ebene Ober- bzw. Unterseite aufweisen. Zur Erzielung einer hohen Steifigkeit des Ladebodens bei einem geringen Gewicht sind die Ober- und die Unterstruktur vorzugsweise voneinander beabstandet und durch mindestens eine Verstrebung miteinander verbunden. Die Verstrebung kann etwa durch eine oder mehrere senkrecht oder schräg zur Ober- bzw. Unterstruktur ausgebildete, in Längsrichtung des Profilelements durchgehende Streben gebildet werden. Hierdurch können etwa aus Stabilitäts- und Gewichtsgründen vorhandene Kanäle der Profilelemente bzw. des Ladebodens zur Durchführung von Versorgungsleitungen für die Raumbeleuchtung genutzt werden. Damit ist eine Verbesserung der Beleuchtung des Fahrzeuginnenraums mit minimalem Aufwand möglich.

Vorzugsweise ist die Versorgungsleitung in einem Endbereich des Kanals mit einem elektrischen Bordnetz des Fahrzeugs verbindbar. Hierfür kann beispielsweise ein Stecker am Ladeboden bzw. an einem Profilelement des Ladebodens angeordnet sein, über den eine elektrische Verbindung mit einem Kabel des Bordnetzes bei einem Einbau des Ladebodens in ein Fahrzeug auf besonders einfache Weise hergestellt werden kann.

Weiterhin ist es bevorzugt, dass der Ladeboden mehrere in Längsrichtung durchgehende Kanäle aufweist, in denen jeweils mindestens eine Versorgungsleitung geführt ist, und dass die Versorgungsleitungen der mehreren Kanäle gemeinsam oder unabhängig voneinander in einem Endbereich eines Kanals mit einem elektrischen Bordnetz des Fahrzeugs verbindbar sind. Insbesondere können die Versorgungsleitungen der mehreren Kanäle in einem Endbereich der Kanäle oder an einem Stirnende des Ladebodens durch eine Verbindungsleitung zusammengeschaltet sein. Es kann aber auch eine unabhängige Verbindung der Versorgungsleitungen der mehreren Kanäle mit dem Bordnetz vorgesehen sein, um eine unabhängige Ansteuerung der jeweiligen Leuchtmittel zu ermöglichen.

Gemäß einer weiteren bevorzugten Ausführungsform der Erfindung weist der Ladeboden mehrere Leuchten auf, die unterschiedliche Farben, unterschiedliche Helligkeiten und/oder unterschiedliche Öffnungswinkel aufweisen. Hierdurch ist eine weiter verbesserte Beleuchtung des Innenraums möglich, die optimal an den jeweiligen Raum anpassbar ist.

Gemäß einer besonders bevorzugten Ausführungsform der Erfindung sind die Leuchten einzeln oder gruppenweise mit unterschiedlichen Versorgungsleitungen verbunden, die unabhängig voneinander mit einem elektrischen Bordnetz des Fahrzeugs verbindbar sind. Insbesondere können dabei die Leuchten je nach Farbe, Helligkeit und/oder Öffnungswinkel unabhängig voneinander ansteuerbar sein. Hierdurch kann eine für die jeweilige Situation optimale Beleuchtung erreichbar sein.

Vorzugsweise ist das Leuchtmittel der mindestens einen Leuchte eine lichtemittierende Diode (LED). Derartige Leuchtmittel sind kompakt und robust und weisen eine ausreichende Helligkeit und eine geringe Wärmeentwicklung auf und können daher ohne Weiteres mechanisch, elektrisch sowie ohne thermische Probleme in einen Ladeboden integriert werden. Ferner sind LEDs in unterschiedlichen Farben verfügbar. Bei Vorhandensein mehrerer Gruppen von RGB-LEDs, die unabhängig voneinander ansteuerbar sind, kann beispielsweise die Farbe der Beleuchtung nach Wunsch einstellbar sein. Ferner können unterschiedliche Bereiche des Ladebodens etwa durch Leuchten in unterschiedlichen Farben markiert sein.

In besonders vorteilhafter Weise kann das Leuchtmittel bzw. die Leuchte ein LED-Folienstreifen sein. Dieser ist besonders einfach in einen Ladeboden zu integrieren und kann bereits die erforderliche Versorgungsleitung umfassen.

Weiterhin ist es bevorzugt, dass der Ladeboden oder ein Profilelement des Ladebodens mindestens eine Längsnut aufweist und dass die Leuchte in der Längsnut angeordnet ist oder eine Öffnung, in der die Leuchte angeordnet ist oder durch die eine in dem Kanal angeordnete Leuchte hindurchleuchtet, in der Längsnut angeordnet ist. Die Längsnut ist insbesondere zu einer Oberseite des Profilelements, d.h. zum Innenraum des Fahrzeugs, offen und kann beispielsweise als Längsnut einer Ladeschiene ausgebildet sein, in der ein Gleitstein verschiebbar geführt ist, oder das Profilelement kann selbst als Ladeschiene ausgebildet sein. Die Leuchte bzw. Öffnung kann in einem Bodenbereich oder in einem Seitenbereich der Längsnut angeordnet sein. Hierdurch kann die Leuchte optimal gegen Beschädigungen, etwa beim Beladen des Laderaums, geschützt werden. Ferner wird es auf diese Weise erleichtert, zwischen den Längsnuten auf der Oberseite des Ladebodens einen Teppich oder eine reibungserhöhende Auflage aufzubringen, ohne dadurch die Leuchten zu verdecken.

Gemäß einer weiteren bevorzugten Ausführungsform der Erfindung umfasst der Ladeboden eine elektrische Anschlussbuchse zum Anschluss weiterer Verbraucher. Die Anschlussbuchse kann beispielsweise als Steckdose ausgebildet sein, die mit einem Deckel verschließbar ist. Die Anschlussbuchse kann insbesondere in ein Profilelement integriert sein und ein eigenes, in dem Kanal geführtes Verbindungskabel aufweisen, das in einem Endbereich des Kanals mit einem Bordnetz des Fahrzeugs verbindbar ist. Hierdurch wird eine weiter verbesserte Nutzbarkeit des mit dem Ladeboden versehenen Laderaums bzw. Passagierraums des Fahrzeugs erzielt.

Ein erfindungsgemäßes Profilelement für einen Ladeboden eines Fahrzeugs weist mindestens einen Kanal auf, der sich in einer Längsrichtung des Profilelements erstreckt und im Wesentlichen von einem zum anderen Ende des Profilelements durchgehend ausgebildet ist. Weiterhin weist das Profilelement mindestens eine Leuchte zur Beleuchtung eines Innenraums des Fahrzeugs auf und mindestens eine Versorgungsleitung zur Energieversorgung der Leuchte, die in dem Kanal geführt ist. Das Profilelement kann ferner Anschlusselemente umfassen, die beispielsweise als Rastvorsprünge und Rastnuten ausgebildet sein können, zur Verbindung mit weiteren Profilelementen, um aus den Profilelementen einen Ladeboden zusammenzusetzen. Insbesondere kann das Profilelement ausgebildet sein, um durch Verbindung mit weiteren Profilelementen einen Ladeboden der oben beschriebenen Art herzustellen.

Die Erfindung wird nachfolgend anhand der Zeichnungen beispielhaft näher erläutert. Es zeigen:
- Fig. 1: ein Ausführungsbeispiel eines erfindungsgemäßen Ladebodens in perspektivischer Ansicht;
- Fig. 2: einen Teil des Ausführungsbeispiels gemäß Fig. 1 in vergrößerter perspektivischer Ansicht.

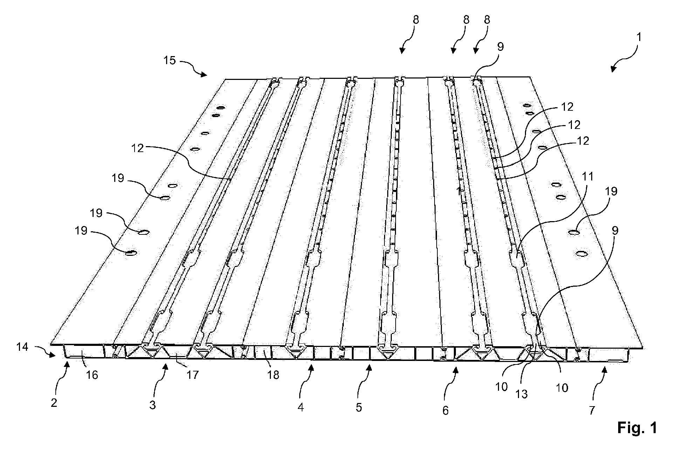

Der in Fig. 1 dargestellte Ladeboden 1 eines Fahrzeugs umfasst eine Mehrzahl von langerstreckten Profilelementen 2, 3, 4, 5, 6, 7, die als Randelemente 2, 7, Zwischenelemente 3, 6 und Mittelelemente 4, 5 ausgebildet sind. In dem in Fig. 1 gezeigten Ausführungsbeispiel sind die beiden Mittelelemente 4, 5 gleichartig ausgebildet; auch beiden Zwischenelemente 3, 6 sind untereinander gleich. Die Randelemente 2, 7 sind bis auf die Verbindung mit den Zwischenelementen 3, 6 ebenfalls gleich. Die Profilelemente 2, 3, 4, 5, 6, 7 sind nebeneinander parallel zueinander angeordnet und miteinander zu dem flächigen Ladeboden 1 verbunden, der auf einer Bodenplatte oder einer Tragstruktur eines Fahrzeugs befestigt werden kann.

Wie in Fig. 1 gezeigt, sind in die Oberseite des im Wesentlichen glatten Ladebodens 1 eine Mehrzahl von Ladeschienen 8 integriert. Jede Ladeschiene 8 weist eine nach oben offene Längsnut 9 auf, die im oberen Bereich durch seitliche Vorsprünge 10 abschnittsweise derart eingeengt ist, so dass ein in die Längsnut 9 eingesetzter, in Fig. 1 nicht dargestellter Gleitstein nur in den Aussparungen 11 nach oben entnommen werden kann. In den durch die Vorsprünge 10 verengten Abschnitten der Längsnut 9 kann der Gleitstein zur Fixierung einer Last befestigt werden, beispielsweise verschraubt oder verklemmt.

Entlang der Längserstreckung des Zwischenelements 6 sind im Boden der Längsnut 9 eine Mehrzahl an Bohrungen 12 angeordnet, die in den darunterliegenden, durchgehenden längserstreckten Kanal 13 des Profilelements 6 reichen. In den Bohrungen 12 sind Leuchten angeordnet, die als Leuchtmittel lichtemittierende Dioden (LEDs) umfassen. Die Bohrungen können oberseitig zum Schutz der LEDs durch Fenster abgeschlossen sein, durch die das von den LEDs erzeugte Licht den Innenraum des Fahrzeugs beleuchtet. Innerhalb des Kanals 13 ist eine Versorgungsleitung zur Versorgung der Leuchten mit elektrischer Energie geführt. An einem vorderen Stirnende 14 oder an einem hinteren Stirnende 15 des Ladebodens 1 kann die Versorgungsleitung mit einem elektrischen Bordnetz verbindbar sein, wodurch die Leuchten nach Bedarf mit elektrischer Energie versorgt werden können (nicht dargestellt). Zum Verschluss des Kanals 13 und zum Schutz vor dem Eindringen von Schmutz oder Feuchtigkeit kann ein ebenfalls nicht dargestellter Verschlussdeckel vorgesehen sein. Die Zwischenelemente 3, 6 weisen im dargestellten Ausführungsbeispiel jeweils zwei derart ausgebildete Längsnuten 9 mit Bohrungen 12 und darin angeordneten Leuchten auf, während die Mittelelemente 4, 5 jeweils eine solche Längsnut 9 umfassen.

Die Kanäle 16 der Randelemente 2, 7 weisen Bohrungen 19 auf, die ebenfalls Leuchten enthalten, die durch in die Bohrungen 19 eingesetzte Fenster gegen Beschädigung und/oder Verschmutzung geschützt sein können. Wie in Fig. 1 durch den größeren Durchmesser der Bohrungen 19 gegenüber den Bohrungen 12 angedeutet, können die in den Bohrungen 19 der Randelemente 2, 7 enthaltenen Leuchten eine größere Fläche und/oder Helligkeit aufweisen als die in den Bohrungen 12 der Zwischen- und Mittelelemente 3, 4, 5, 6. Hierdurch kann bei entsprechender Ausrichtung der Leuchten eine indirekte Beleuchtung des Innenraums des Fahrzeugs durch Beleuchtung der seitlichen Wände erreicht werden, wodurch eine angenehmere Lichtverteilung und der Raumeindruck gesteigert werden kann. In den Kanälen 16 der Randelemente 2, 7 verlaufen die Versorgungsleitungen der in den Bohrungen 19 angeordneten Leuchten. Die Leuchten der Randelemente 2, 7 können beispielsweise eine andere Farbe haben als die Leuchten der Zwischen- und Mittelelemente 3, 4, 5, 6 und können unabhängig von diesen schaltbar sein.

Die weiteren Kanäle 17, 18 der Zwischen- bzw. Mittelelemente 3, 4, 5, 6, die keine Leuchten umfassen, können beispielsweise zur Durchführung von Kabeln genutzt werden.

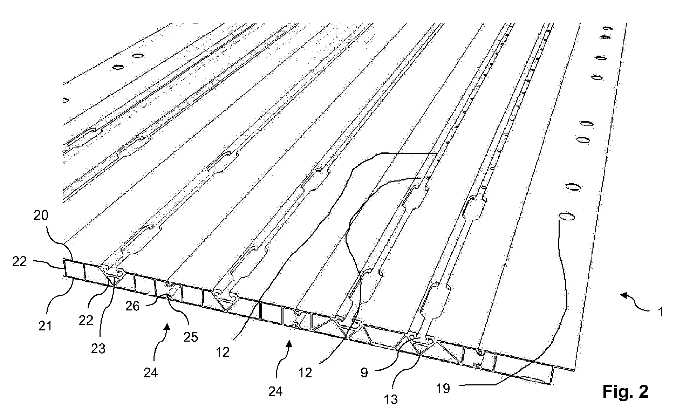

Wie in der vergrößerten Darstellung der Fig. 2 gezeigt, weisen die Profilelemente 2, 3, 4, 5, 6, 7 jeweils auf ihrer Ober- und Unterseite eine im Wesentlichen glatte Oberstruktur 20 bzw. Unterstruktur 21 auf, wobei die Unterstruktur 21 zur Befestigung an einer Tragstruktur oder auf einem Bodenblech des Fahrzeugs ausgebildet ist. Ober- und Unterstruktur 20, 21 sind zur Erhöhung der Steifigkeit des Ladebodens 1 durch in Längsrichtung durchgehende Streben 22 miteinander verbunden. Auch der Boden der Längsnut 9 kann als zwischen zwei Streben 22 angeordnete weitere Strebe 23 zur Verbesserung der Stabilität des Ladebodens dienen.

In Fig. 2 sind auch die Anschlusselemente 24 zu erkennen, durch die die Profilelemente 2, 3, 4, 5, 6, 7 miteinander verbunden sind. Im dargestellten Ausführungsbeispiel sind die Anschlusselemente 24 zum Herstellen einer formschlüssigen Verbindung ausgebildet, etwa als Lippen 25, die Rastnuten ausbilden, in die Rastvorsprünge 26 einrasten. Der Ladeboden 1 kann aus den als Strangpressprofile hergestellten, abgelängten und mit den Bohrungen 12, 19 sowie den darin enthaltenen Leuchten und Versorgungsleitungen versehenen Profilelementen 2, 3, 4, 5, 6, 7 beispielsweise durch seitliches Zusammenfügen oder auch durch Einschieben in Längsrichtung hergestellt werden.

Der Übersichtlichkeit halber sind nicht in allen Figuren alle Bezugszeichen dargestellt. Im Text nicht erläuterte Bezugszeichen haben die gleiche Bedeutung wie in den übrigen Figuren.

### Bezugszeichenliste

| | |
|---|---|
| 1 | Ladeboden |
| 2 | Randelement |
| 3 | Zwischenelement |
| 4 | Mittelelement |
| 5 | Mittelelement |
| 6 | Zwischenelement |
| 7 | Randelement |
| 8 | Ladeschiene |
| 9 | Längsnut |
| 10 | Vorsprung |
| 11 | Aussparung |
| 12 | Bohrung |
| 13 | Kanal |
| 14 | Stirnende |
| 15 | Stirnende |
| 16 | Kanal |
| 17 | Kanal |
| 18 | Kanal |
| 19 | Bohrung |
| 20 | Oberstruktur |
| 21 | Unterstruktur |
| 22 | Strebe |
| 23 | Strebe |
| 24 | Anschlusselement |
| 25 | Lippe |
| 26 | Rastvorsprung |

## Patentansprüche

1. Ladeboden für ein Fahrzeug, umfassend eine Mehrzahl von in einer Längsrichtung langerstreckten, nebeneinander angeordneten und miteinander verbundenen Profilelementen, wobei der Ladeboden (1) mindestens einen in der Längsrichtung durchgehenden Kanal (13, 16) aufweist,
**dadurch gekennzeichnet, dass** der Ladeboden (1) mindestens eine Leuchte aufweist zur Beleuchtung eines Innenraums des Fahrzeugs und dass mindestens eine Versorgungsleitung zur Energieversorgung der Leuchte in dem Kanal (13, 16) geführt ist.

2. Ladeboden nach Anspruch 1,
**dadurch gekennzeichnet, dass** der mindestens eine in der Längsrichtung durchgehende Kanal (13, 16) zwischen einer Oberstruktur (20), einer Unterstruktur (21) und/oder mindestens einer die Ober- und die Unterstruktur (20, 21) eines Profilelements verbindenden Strebe (22, 23) ausgebildet ist.

3. Ladeboden nach Anspruch 1 oder 2,
**dadurch gekennzeichnet, dass** die Versorgungsleitung in einem Endbereich des Kanals (13, 16) mit einem elektrischen Bordnetz des Fahrzeugs verbindbar ist.

4. Ladeboden nach einem der vorhergehenden Ansprüche,
**dadurch gekennzeichnet, dass** der Ladeboden (1) mehrere Leuchten aufweist, die unterschiedliche Farben, Helligkeiten und/oder Öffnungswinkel aufweisen.

5. Ladeboden nach dem vorhergehenden Anspruch,
**dadurch gekennzeichnet, dass**
die mehreren Leuchten je nach Farbe, Helligkeit und/oder Öffnungswinkel mit unterschiedlichen Versorgungsleitungen verbunden sind, die unabhängig voneinander mit einem elektrischen Bordnetz des Fahrzeugs verbindbar sind.

6. Ladeboden nach einem der vorhergehenden Ansprüche,
**dadurch gekennzeichnet, dass** das Leuchtmittel der mindestens einen Leuchte eine LED, insbesondere ein LED-Folienstreifen ist.

7. Ladeboden nach einem der vorhergehenden Ansprüche,
**dadurch gekennzeichnet, dass** der Ladeboden (1) mindestens eine Längsnut (9) aufweist und dass die Leuchte in der Längsnut (9) angeordnet ist.

8. Ladeboden nach einem der vorhergehenden Ansprüche,
**dadurch gekennzeichnet, dass** der Ladeboden eine elektrische Anschlussbuchse zum Anschluss weiterer Verbraucher aufweist.

9. Profilelement für einen Ladeboden eines Fahrzeugs, wobei das Profilelement einen in einer Längsrichtung des Profilelements erstreckten durchgehenden Kanal (13, 16) aufweist,
**dadurch gekennzeichnet, dass** das Profilelement mindestens eine Leuchte aufweist zur Beleuchtung eines Innenraums des Fahrzeugs und dass mindestens eine Versorgungsleitung zur Energieversorgung der Leuchte in dem Kanal (13, 16) geführt ist.
